# EUROPÄISCHE PATENTANMELDUNG

(11) **EP 2 320 530 A2**
(43) Veröffentlichungstag der Anmeldung: **11.05.2011**
(21) Anmeldenummer: 10186404.9
(22) Anmeldetag: 04.10.2010
(51) Int. Cl.: H02B 1/30

(54) **Verbindungselement sowie Anordnung bestehend aus zwei Verteilerschränken und einem Verbindungselement**

(30) Priorität: 04.11.2009 DE 102009051894
(71) Anmelder: SIEMENS AKTIENGESELLSCHAFT, 80333 München (DE)
(72) Erfinder: Müller, Gerhard, 93492, Treffelstein (DE)

(57) **Zusammenfassung**

Das erfindungsgemäße Verbindungselement (1) zum Verbinden zweier nebeneinander angeordneter Seitenwände (12-1, 12-2) zweier Verteilerschränke (11-1, 11-2) weist einen länglichen Grundkörper (2) auf, welcher zum Einführen in eine in beiden Seitenwänden (12-1, 12-2) ausgebildete, fluchtende Verbindungsbohrung (13) vorgesehen ist. Weiterhin weist das Verbindungselement Rückhaltemittel (3) auf, die an einem ersten Ende des länglichen Grundkörpers (2) angeordnet sind. Die Rückhaltemittel (3) sind dabei derart ausgebildet, dass sie in einer Montageposition am Grundkörper (2) anliegen und durch die Verbindungsbohrung (13) durchführbar sind, und nach erfolgter Durchführung durch die Verbindungsbohrung (13) in einer Verriegelungsposition vom Grundkörper (2) abstehen. Ferner weist das Verbindungselement (1) ein Druckelement (4) auf, das an einem zweiten Ende des Grundkörpers (2) beweglich gelagert und mit einem Bedienelement (5) gekoppelt ist. Das Bedienelement (5) ist dabei am Grundkörper (2) beweglich gelagert und derart ausgebildet, dass das Druckelement (4) bei Betätigen des Bedienelements (5) relativ zum Grundkörper (2) in Richtung der Rückhaltemittel (3) gedrückt wird, so dass die zwischen den verriegelten Rückhaltemitteln (3) und dem Druckring (4) befindlichen Seitenwände (12-1, 12-2) gegeneinander gedrückt werden. Dadurch kann der Montageaufwand deutlich reduziert werden.

## Beschreibung

Die Erfindung betrifft ein Verbindungselement zum Verbinden zweier nebeneinander angeordneter Seitenwände zweier Verteilerschränke sowie eine Anordnung, bestehend aus einem ersten und einem zweiten Verteilerschrank sowie zumindest einem Verbindungselement.

Ein Verteilerschrank dient der Aufnahme elektrischer und/oder elektronischer Komponenten einer Anlage, beispielsweise einer einzelnen Maschine, einer Fertigungsanlage oder eines Gebäudes. Im einfachsten Fall beinhaltet er nur Klemmen zum übersichtlichen elektrischen Verbinden verschiedener Komponenten der Anlage und schützt diese vor äußeren Einflüssen wie beispielsweise Staub oder Feuchtigkeit oder äußerer mechanischer Krafteinwirkung. Im Inneren des Verteilerschranks sind im Allgemeinen Halterungen zur Strukturierung des Innenaufbaus sowie Stromführungssysteme zum Anschluss der elektrischen und/oder elektronischen Komponenten vorgesehen. Verteilerschränke werden - je nach Anwendung - aus lackiertem Stahlblech, Kunststoff oder Aluminiumblech in verschiedenen Bauformen, beispielsweise als Hänge- oder Stand-Verteilerschrank, gefertigt.

Werden mehrere einzelne Verteilerschränke benötigt, so kann es zweckdienlich sein, diese benachbart anzuordnen, um elektrische Leitungen ohne großen Aufwand von einem Verteilerschrank zum nächsten führen zu können. Werden die einzelnen Verteilerschränke unmittelbar nebeneinander angeordnet, so ist es vorteilhaft, diese mechanisch miteinander zu verbinden, beispielsweise um die Standfestigkeit zu erhöhen oder Relativbewegungen zwischen den Verteilerschränken zu unterbinden. Hierzu werden heutzutage entweder Verbindungslaschen eingesetzt, die mit den beiden zu verbindenden Verteilerschränken verschraubt werden, oder es werden Schraubverbindungen durch die benachbarten Seitenwände verwendet. Für beide Montagemöglichkeiten ist jedoch zusätzliches Werkzeug erforderlich, woraus ein nicht unerheblicher Montageaufwand resultiert, vor allem wenn die Montagestelle nicht oder nur schwer zugänglich ist.

Es ist deshalb die Aufgabe der vorliegenden Erfindung, ein Verbindungselement zum Verbinden zweier nebeneinander angeordneter Seitenwände zweier Verteilerschränke sowie eine Anordnung, bestehend aus einem ersten und einem zweiten Verteilerschrank und zumindest einem derartigen Verbindungselement bereitzustellen, welche eine einfache und schnelle Montage des Verbindungselements ermöglichen.

Diese Aufgabe wird durch das Verbindungselement sowie die Anordnung gemäß den unabhängigen Ansprüchen gelöst. Vorteilhafte Ausgestaltungen sind Gegenstand der abhängigen Ansprüche.

Das erfindungsgemäße Verbindungselement zum Verbinden zweier nebeneinander angeordneter Seitenwände zweier Verteilerschränke weist einen länglichen Grundkörper auf, welcher zum Einführen in eine in beiden Seitenwänden ausgebildete, fluchtende Verbindungsbohrung vorgesehen ist. Weiterhin weist das Verbindungselement Rückhaltemittel auf, die an einem ersten Ende des länglichen Grundkörpers angeordnet sind. Die Rückhaltemittel sind dabei derart ausgebildet, dass sie in einer Montageposition am Grundkörper anliegen und durch die Verbindungsbohrung durchführbar sind, und nach erfolgter Durchführung durch die Verbindungsbohrung in einer Verriegelungsposition vom Grundkörper abstehen. Ferner weist das Verbindungselement ein Druckelement auf, welches an einem zweiten Ende des Grundkörpers beweglich gelagert und mit einem Bedienelement gekoppelt ist. Das Bedienelement ist am Grundkörper beweglich gelagert und derart ausgebildet, dass das Druckelement bei Betätigen des Bedienelements relativ zum Grundkörper in Richtung der Rückhaltemittel gedrückt wird, so dass die zwischen den verriegelten Rückhaltemitteln und dem Druckring befindlichen Seitenwände gegeneinander gedrückt werden.

Zur Montage wird das Verbindungselement in die in den beiden Seitenwänden ausgebildete, fluchtende Verbindungsbohrung gesteckt, bis die Rückhaltemittel aus dem gegenüberliegenden Ende der Verbindungsbohrung heraustreten und ihre Verriegelungsposition einnehmen. Anschließend wird das Bedienelement betätigt, so dass das Druckelement relativ zum Grundkörper gegen die Rückhaltemittel gedrückt wird, wodurch auf die zwischen den verriegelten Rückhaltemitteln und dem Druckelement befindlichen Seitenwände eine Kraft ausgeübt wird, welche die Seitenwände zusammendrückt. Hierbei ergibt sich der Vorteil, dass das Verbindungselement manuell ohne Zuhilfenahme von Werkzeugen zu bedienen ist. Die Montage des Verbindungselements zum Verbinden zweier nebeneinander angeordneter Verteilerschränke kann damit einfach und schnell ausgeführt werden, was sich in einer deutlichen Reduktion der Montagekosten niederschlägt.

In einer vorteilhaften Weiterbildung des Verbindungselements ist das Bedienelement als Verschlussbügel ausgebildet, welcher an einem ersten Abschnitt drehbeweglich an einem Drehlager des Grundkörpers befestigt ist und in einem zweiten Abschnitt mit dem Druckelement in Kontakt steht. Die Ausbildung des Bedienelements als Verschlussbügel stellt eine einfache und kostengünstige Realisierungsmöglichkeit dar. Der Verschlussbügel ist drehbeweglich am Grundkörper, genauer gesagt: am Drehlager befestigt, wobei das Drehlager fest mit dem Grundkörper verbunden ist. Beim Betätigen wirkt der Verschlussbügel über den zweiten Abschnitt derart auf das Druckelement ein, dass dieses entlang des Grundkörpers gegen die verriegelten Rückhaltemittel gedrückt wird. Dies ist beispielsweise durch eine exzentrische Lagerung des Verschlussbügels am Drehlager realisierbar. Die Kopplung zwischen dem Verschlussbügel und dem Druckring kann dabei sowohl kraftschlüssig als auch formschlüssig realisiert sein.

In einer weiteren vorteilhaften Weiterbildung des Verbindungselements ist das Druckelement am zweiten Abschnitt als Teil des Verschlussbügels ausgebildet. Die Funktion des Druckelements, zusammen mit den Rückhaltemitteln die dazwischen angeordneten Seitenwände zusammenzudrücken, ist dabei in das Bedienelement integriert. Ein eigenes Bauteil ist hierfür nicht erforderlich, was einen vereinfachten Zusammenbau des Verbindungselements ermöglicht.

In einer weiteren vorteilhaften Weiterbildung des Verbindungselements ist das Druckelement als Druckring, welcher um den länglichen Grundkörper herum angeordnet ist, ausgebildet. Mit Hilfe des Druckrings kann der Druck über eine größere Fläche und damit gleichmäßiger auf die Seitenwand ausgeübt werden.

In einer weiteren vorteilhaften Weiterbildung des Verbindungselements ist der zweite Abschnitt des Verschlussbügels drehbeweglich am Druckring befestigt. Die drehbewegliche Befestigung des Verschlussbügels am Druckring ermöglicht neben einer einfachen Befestigung auch ein einfaches Lösen des Verbindungselements aus seiner Verriegelungsposition und damit eine einfache und schnelle Demontage der Schrankverbindung.

In einer weiteren vorteilhaften Weiterbildung des Verbindungselements ist das Drehlager zur Anpassung an unterschiedliche Wandstärken der Seitenwände relativ zum Grundkörper verschiebbar ausgebildet. Durch die Anpassbarkeit an verschiedene Wandstärken ist auch bei der Montage an Verteilerschränken mit unterschiedlich dicken Seitenwänden lediglich eine gemeinsame Ausführungsvariante des Verbindungselements erforderlich. Ferner kann auf zusätzliche Anpassungsmittel - beispielsweise Distanzstücke - verzichtet werden.

In einer weiteren vorteilhaften Weiterbildung des Verbindungselements ist die Verschiebung des Drehlagers relativ zum Grundkörper über ein Gewinde realisiert. Die Verwendung eines Gewindes zur Einstellung eines vordefinierten Abstands stellt eine einfache und kostengünstige Möglichkeit dar. Im Vergleich zu anderen Alternativen, beispielsweise Verrast- oder Befestigungsmöglichkeiten in diskreten Abständen, hat das Gewinde darüber hinaus noch den Vorteil, dass der Abstand zwischen den Rückhaltemitteln und dem Druckring kontinuierlich, d.h. stufenlos, und nicht nur in diskreten Schritten einstellbar ist.

In einer weiteren vorteilhaften Weiterbildung des Verbindungselements ist der Verschlussbügel mehrteilig als Kniehebel ausgeführt. Ein Kniehebel stellt eine einfache und kostengünstig herzustellende Realisierungsmöglichkeit des Betätigungselements dar. Aufgrund der mehrteiligen Bauweise kann der Verschlussbügel auf diverse Anforderungen hin - beispielsweise hinsichtlich der Bewegungsgeometrie oder der Andruckkraft - ausgelegt werden. Hierdurch wird eine höhere Flexibilität erreicht.

In einer weiteren vorteilhaften Weiterbildung des Verbindungselements ist der Verschlussbügel über einen Totpunkt hinweg in eine sichere Verschlussposition bewegbar, in der ein unbeabsichtiges Öffnen des Verbindungselements unterbindbar ist. Dadurch, dass der Verschlussbügel über den Totpunkt hinweg in die Verschlussposition bewegt wird, wird ein unbeabsichtiges Lösen - beispielsweise aufgrund von Schwingungen oder Stößen - vermieden. Somit wird eine sichere Verriegelungsposition des Verbindungselements gewährleistet.

Die erfindungsgemäße Anordnung besteht aus einem ersten und einem zweiten Verteilerschrank sowie zumindest einem erfindungsgemäßen Verbindungselement der zuvor beschriebenen Art. Dabei weist der erste Verteilerschrank eine erste Seitenwand und der zweite Verteilerschrank eine zweite Seitenwand, welche zur ersten Seitenwand unmittelbar benachbart ist, auf. Die beiden Seitenwände weisen zumindest eine fluchtende Verbindungsbohrung auf, welche zum Verbinden der Verteilerschränke mit Hilfe des Verbindungselements vorgesehen ist.

Hinsichtlich der Vorteile der erfindungsgemäßen Anordnung wird auf die Ausführungen zu dem erfindungsgemäßen Verbindungselement verwiesen.

Im Folgenden werden Ausführungsbeispiele des erfindungsgemäßen Verbindungselements unter Bezug auf die beigefügten Figuren näher erläutert. Die Figuren zeigen schematisch:

| | |
|---|---|
| Figuren 1A bis 1F | ein erstes Ausführungsbeispiel des erfindungsgemäßen Verbindungselements in mehreren Montageschritten und Ansichten, |
| Figuren 2A bis 2D | ein zweites Ausführungsbeispiel des erfindungsgemäßen Verbindungselements in mehreren Montageschritten und Ansichten, |
| Figur 3 | die erfindungsgemäße Anordnung, bestehend aus zwei Verteilerschränken sowie mehreren Verbindungselementen, |

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

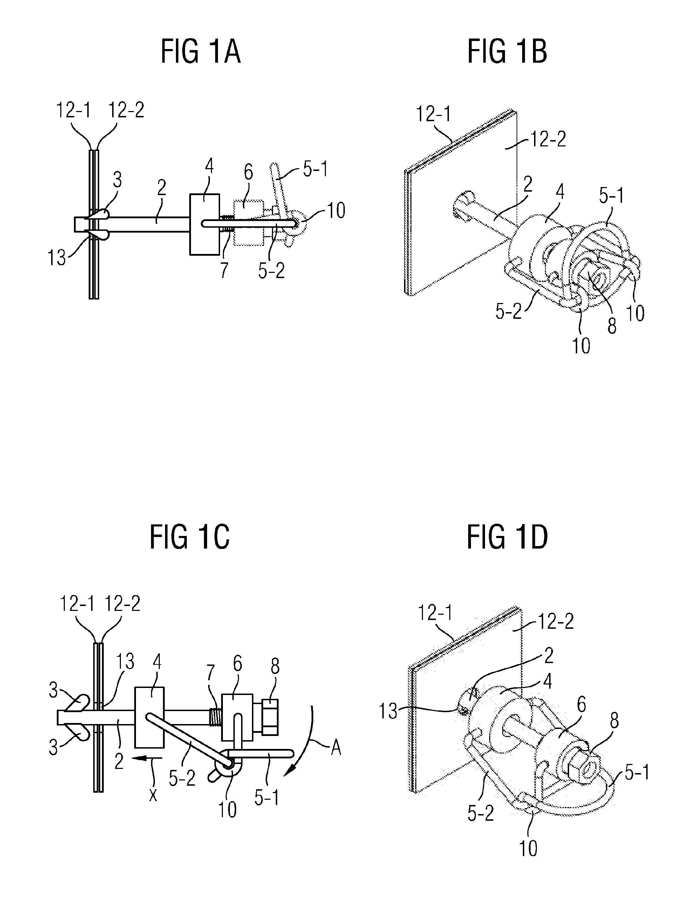

Die Figuren 1A bis 1F zeigen ein erstes Ausführungsbeispiel des erfindungsgemäßen Verbindungselements 1 in mehreren Montageschritten und Ansichten. Figuren 1A und 1B zeigen das Verbindungselement 1 in einer Montageposition, in der die an einem ersten Ende des länglichen Grundkörpers 2 des Verbindungselements 1 angeordneten Rückhaltemittel 3 am Grundkörper 2 anliegen. In dieser Position können die Rückhaltemittel 3 durch eine in zwei Seitenwänden 12-1 und 12-2 ausgebildete, gemeinsamen Verbindungsbohrung 13 hindurchgeführt werden. Die Rückhaltemittel 3 können hierzu beispielsweise am ersten Ende des Grundkörpers 2 beweglich gelagert sein. Es ist jedoch ebenso möglich, die Rückhaltemittel 3 aus einem flexiblen Material - beispielsweise einem Elastomer - auszubilden und an den Grundkörper 2 anzuformen, so dass sie beim Durchführen durch die Verbindungsbohrung 13 an den Grundkörper 2 gedrückt werden und beim Austritt aus der Verbindungsbohrung (siehe Fig. 1C und 1D) wieder ihre ursprüngliche Gestalt annehmen.

An einem zweiten Ende des länglichen Grundkörpers 2 weist das Verbindungselement 1 ein Drehlager 6 auf, welches fest mit dem Grundkörper 2 verbunden ist. Weiterhin weist das Verbindungselement 1 ein Druckelement 4 in Form eines Druckrings auf, welcher um den Grundkörper 2 herum angeordnet ist und entlang einer länglichen Erstreckung des Grundkörpers 2 in einer Verschieberichtung X beweglich ist. Ein Bedienelement 5, welches in Form eines Verschlussbügels ausgebildet ist, weist einen ersten Abschnitt 5-1 auf, welcher drehbeweglich am Drehlager 6 gelagert ist. Ein zweiter Abschnitt 5-2 des Verschlussbügels 5 ist mit dem Druckring 4 gekoppelt, wobei diese Kopplung ebenfalls drehbeweglich ausgebildet ist. Der erste Abschnitt 5-1 und der zweite Abschnitt 5-2 des Verschlussbügels 5 sind über ein Gelenk 10 ebenfalls beweglich miteinander verbunden und bilden eine Kniehebelmechanik zum Bewegen des Druckrings 4.

Die Figuren 1C und 1D zeigen die Kinematik des Verschlusselements 1. Bei Betätigen des Verschlussbügels 5, d.h. bei Bewegen des ersten Abschnitts 5-1 in Pfeilrichtung A, stützt sich dieser über das Drehlager 6 am Grundkörper 2 ab und bewirkt über das Gelenk 10 sowie den zweiten Abschnitt 5-2 eine Verschiebung des Druckelements 4 relativ zum Grundkörper 2 entlang seiner länglichen Erstreckung in der Verschieberichtung X. Zum Einstellen eines definierten Abstands des Drehlagers 6 zu den Rückhaltemitteln 3 in der X-Richtung ist ferner eine Justagevorrichtung 8 vorgesehen. Diese weist ein Innengewinde auf, welches mit einem auf dem zweiten Ende des Grundkörpers 2 ausgebildeten Außengewinde 7 zusammenwirkt, um das Drehlager 6 in der Verschieberichtung X zu verschieben.

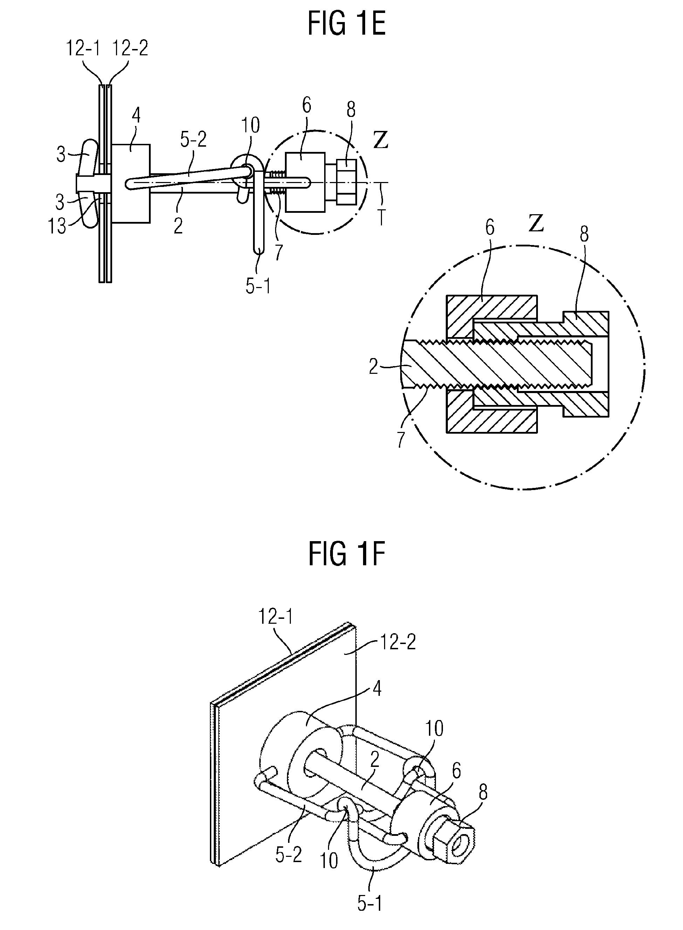

Die Figuren 1E und 1F zeigen das Verbindungselement in seiner Verriegelungsposition, in der die beiden Seitenwände 12-1 und 12-2 gegeneinander gedrückt werden. Die Rückhaltemittel 3 nehmen ihre Verriegelungsposition, in der sie vollständig vom Grundkörper abstehen, ein und werden über den Grundkörper 2 gegen die erste Seitenwand 12-1 gezogen. Gleichzeitig wird der Druckring 6 mit Hilfe des Verschlussbügels 5 gegen die zweite Seitenwand 12-2 gedrückt, so dass die beiden Seitenwände 12-1 und 12-2 gegeneinander gedrückt und werden. Der Verschlussbügel nimmt dabei eine Verschlussposition ein. Hierbei wird das Gelenk 10 über einen Totpunkt T der Kniehebelmechanik, bestehend aus dem ersten und dem zweiten Abschnitt 5-1 und 5-2 des Verschlussbügels hinweg in die Verschlussposition bewegt. Der Totpunkt T der Kniehebelmechanik ist erreicht, wenn der zweite Abschnitt 5-2 parallel zur Verschieberichtung X und damit zum Grundkörper 2 des Verbindungselements 1 orientiert ist, in Fig. 1E angedeutet durch die strichpunktierte Linie T. In dieser Verschlussposition müsste zum Lösen des Verbindungselements 1 zunächst eine Kraft aufgebracht werden, welche den Druckring 6 gegen die Rückhaltemittel 3 drückt, um das Gelenk 10 über den Totpunkt T hinweg zu bewegen. Auf diese Weise kann ein unbeabsichtigtes Öffnen des Verbindungselements 1 - beispielsweise aufgrund von Schwingungen - unterbunden werden.

Ausschnitt Z zeigt eine vergrößerte Darstellung der Verstellmechanik zur Einstellung eines definierten Abstands des Drehlagers 6 zu den Rückhaltemitteln, beispielsweise um das Verbindungselement 1 an verschiedene Wandstärken der Seitenwände 12-1 und/oder 12-2 anzupassen. Hierzu weist der längliche Grundkörper 2 an seinem zweiten Ende ein Außengewinde 7 auf. Das Drehlager 6 weist eine Bohrung auf, in der das zweite Ende des Grundkörpers 2 aufgenommen ist, so dass das Drehlager 6 in der Verschieberichtung X relativ zum Grundkörper 2 bewegbar ist. Da das Drehlager dabei selbst nicht rotieren kann, wird auf das zweite Ende des Grundkörpers 2 ein Justageelement 8 in Form einer Mutter aufgeschraubt. Die Mutter 8 stellt somit einen einseitigen Anschlag für das verschiebbare Drehlager 6 dar. Wird die Mutter im Uhrzeigersinn auf das Gewinde 7 gedreht, wird das Drehlager 6 in Richtung der Rückhaltemittel 3 geschoben; der Abstand des Drehlagers 6 zu den Rückhaltemitteln 3 wird verkleinert. Entsprechend kann der Abstand durch Drehung der Mutter 8 im Gegenuhrzeigersinn wieder vergrößert werden. Über diese Verstellmechanik kann somit indirekt auch der Druck, welcher vom Verbindungselement 1 in der Verriegelungsposition auf die Seitenwände 12-1 und 12-2 ausgeübt wird, eingestellt werden.

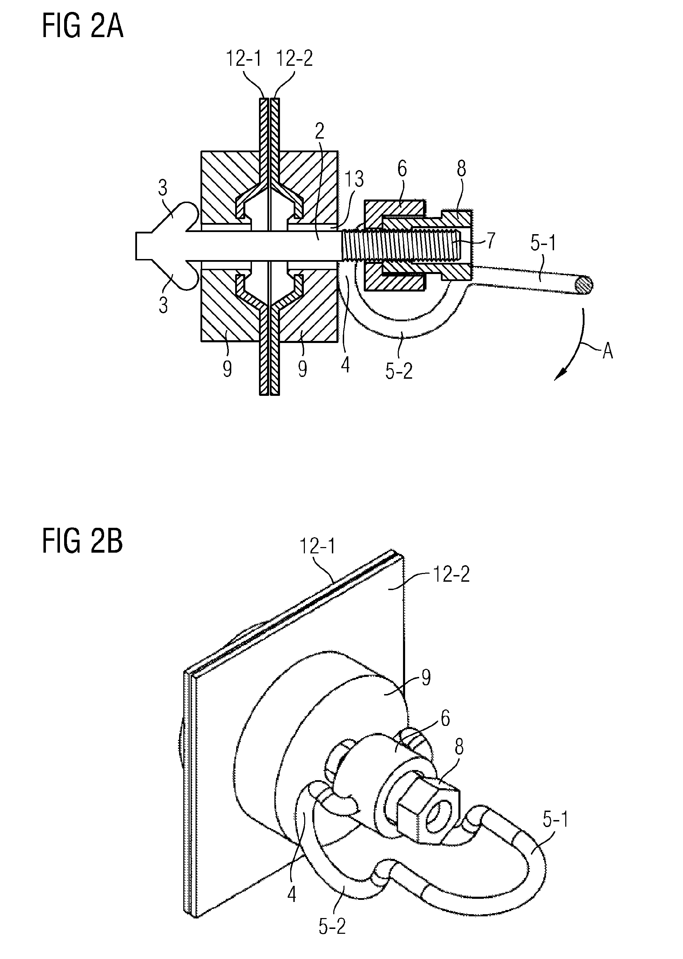

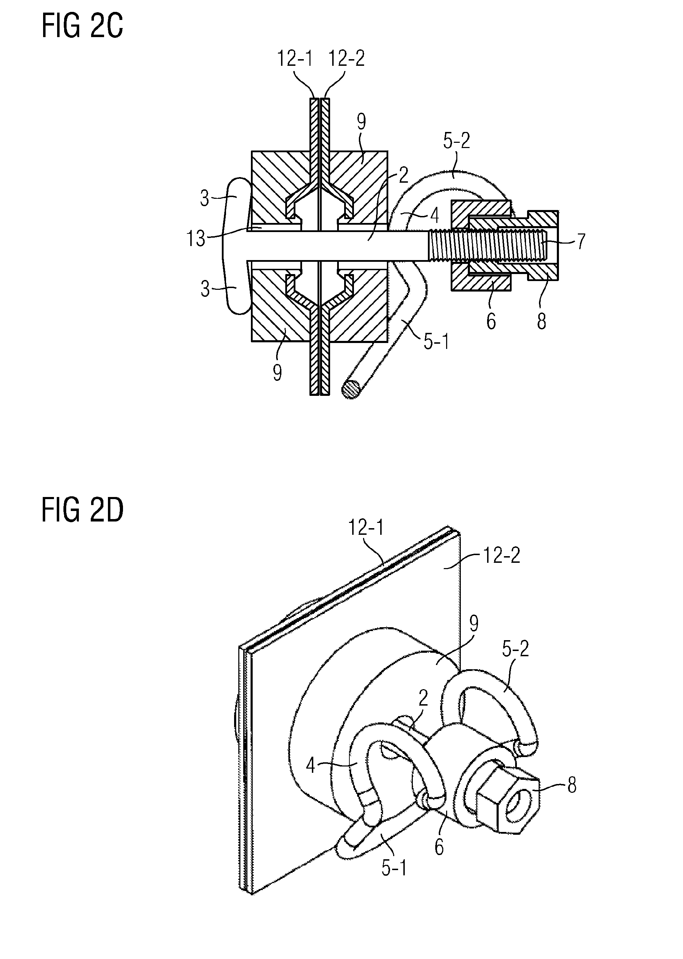

In den Figuren 2A bis 2D ist ein zweites Ausführungsbeispiel des erfindungsgemäßen Verbindungselements 1 in mehreren Montageschritten und Ansichten schematisch dargestellt. Die Figuren 2A und 2C zeigen wiederum jeweils eine Schnittdarstellung das Verbindungselements 1 in verschiedenen Montageschritten, wohingegen in den Figuren 2B und 2D jeweils eine perspektivische Ansicht des Verbindungselements 1 im jeweiligen Montageschritt darstellt ist. Das Verbindungselement 1 ist im Wesentlichen bereits aus den Darstellungen der Figuren 1A bis 1F bekannt. Im Unterschied dazu weist es jedoch ein einstückiges Bedienelement 5 in Form eines Verschlussbügels auf. Der Verschlussbügel 5 ist wiederum an einem Drehlager 6 drehbar befestigt und weist einen ersten Abschnitt 5-1 auf, welcher zur manuellen Betätigung vorgesehen ist. Ein zweiter Abschnitt 5-2 des Verschlussbügels 5 ist relativ zur Lagerung am Drehlager exzentrisch ausgebildet und bildet mit seinen beiden bügelartigen Schenkeln das Druckelement 4, welches bei Betätigung des Verschlussbügels 5 in Betätigungsrichtung A relativ zum Grundkörper 2 in X-Richtung gegen die Rückhaltemittel 3 gedrückt wird. Der Verschlussbügel 5 ist im zweiten Abschnitt 5-2 wiederum derart ausgebildet, dass zum Bewegen des Verschlussbügels 5 aus seiner Verschlussposition und damit zum Lösen des Verbindungselements 1 wiederum zunächst ein Totpunkt überwunden werden muss. Auf diese Weise wird durch die Formgebung des zweiten Abschnitts 5-2 ein unbeabsichtigtes Lösen des Verbindungselements 1 unterbunden.

Die Figuren 2A und 2B zeigen das Verbindungselement 1 in einem Zustand, in dem die Rückhaltemittel 3 des Verbindungselements 1 bereits durch die Verbindungsöffnung 13 hindurchgeführt wurden, aber noch kein Druck auf die Seitenwände 12-1 und 12-2 ausgeübt wird. Die Figuren 2C und 2D zeigen das Verbindungselement 1 in der Verriegelungsposition, in der die Rückhaltemittel 3 vom Grundkörper 2 abstehen gegen die Seitenwand 12-1 gedrückt werden. Dabei wird die Kraft nicht direkt auf die Seitenwände 12-1 und 12-2 aufgebracht, sondern über zwei Widerlager 9. Diese haben bei nicht vollständig planen Seitenwänden 12 den Vorteil, dass beispielsweise Erhebungen ausgeglichen werden können, so dass die beiden bügelartigen Schenkeln des als Druckelement 4 ausgebildeten, zweiten Abschnitts 5-2 des Verschlussbügels 5 gleichmäßig auf die Seitenwand 12-2 drücken. Die Widerlager 9 können beispielsweise aus duroplastischem oder thermoplastischem Kunststoff ausgebildet sein. Es ist jedoch ebenso möglich, die Kraft direkt, d.h. ohne die Verwendung von Widerlagern 9, von den Rückhaltemitteln 3 bzw. den bügelartigen Schenkeln des als Druckelement 4 ausgebildeten, zweiten Abschnitts 5-2 des Verschlussbügels 5 auf die Seitenwände 12-1 bzw. 12-2 aufzubringen. Die Aufwölbung der Seitenwände 12-1 und 12-2 im Bereich der gemeinsamen Verbindungsöffnung 13 hat den Vorteil, dass die Verbindungsöffnung 13, sofern sie nicht benötigt wird, mit Hilfe eines einfachen Stopfens verschließbar ist.

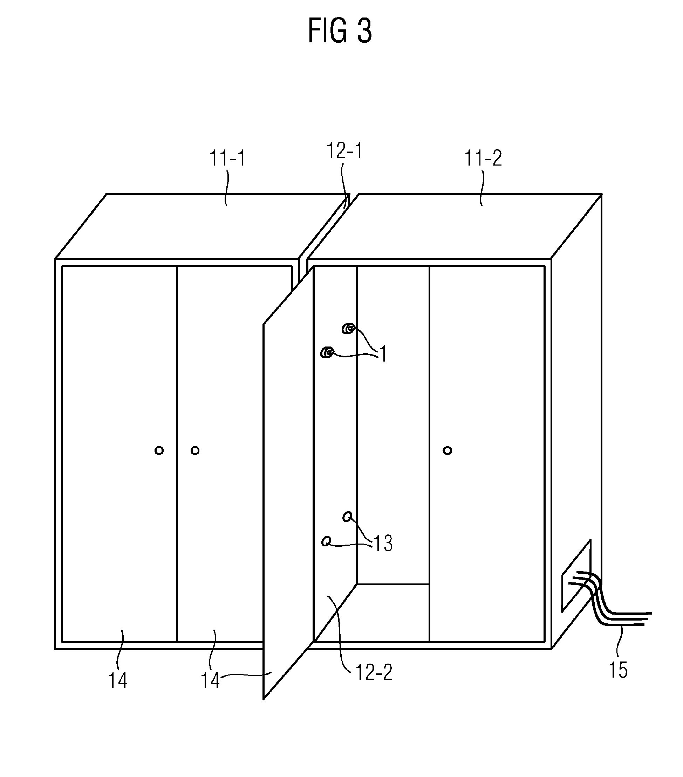

Figur 3 zeigt schematisch die die erfindungsgemäße Anordnung, bestehend aus einem ersten Verteilerschrank 11-1, einem zweiten Verteilerschrank 11-2 sowie mehreren Verbindungselementen 1. Der erste Verteilerschrank 11-1 weist eine erste Seitenwand 12-1 auf, welche unmittelbar benachbart zu einer zweiten Seitenwand 12-2 des zweiten Verteilerschranks 11-2 angeordnet ist. Im Idealfall sind die beiden Seitenwände 12-1 und 12-2 parallel zueinander ausgerichtet. Die beiden Seitenwände 12-1 und 12-2 weisen mehrere gemeinsame Verbindungsbohrungen 13 auf, wobei jede der gemeinsamen Verbindungsbohrungen 13 zum Einführen jeweils eines Verbindungselements 1 vorgesehen ist. Ferner weisen die Verteilerschränke 11-1 und 11-2 jeweils zwei Türen 14 auf. Diese können sowohl dem Schutz vor Staub, Feuchtigkeit oder unerlaubtem Zugriff dienen als auch dem Schutz von Personen vor elektrischem Schlag. Die Verteilerschränke 11-1 und 11-2 können hierzu auch eintürig ausgeführt sein. Über eine oder mehrere Öffnungen in einer weiteren Seitenwand eines der Verteilerschränke 11 können eine oder mehrere elektrische Leitungen 15 ins Innere des Verteilerschranks 11 geführt werden.

Zum Verbinden der beiden Verteilerschränke 11-1 und 11-2 werden diese jeweils mit ihren Seitenwänden 12-1 und 12-2 aneinandergestellt und möglichst exakt zueinander ausgerichtet. Liegen die gemeinsamen Verbindungsbohrungen 13 deckungsgleich aufeinander, so wird jeweils ein Verbindungselement 1 mit seinem ersten Ende durch die jeweilige Verbindungsbohrung 13 gesteckt, bis die Rückhaltemittel 3 des Verbindungselements 1 auf der anderen Seite aus der Verbindungsbohrung 13 heraustreten und automatisch ihre Verriegelungsposition einnehmen. Anschließend kann das Verbindungselement 1 durch Betätigen des Bedienelements 5 in eine Verriegelungsposition, in der die beiden Seitenwände 12-1 und 12-2 gegeneinander gedrückt werden, gebracht werden. Die Montage kann dabei ohne Zuhilfenahme von Werkzeugen manuell von einem Monteur ausgeführt werden. Sind die beiden Verteilerschränke 11-1 und 11-2 zueinander exakt ausgerichtet, so dass die Verbindungsbohrungen fluchtend übereinander liegen, so ist für die Montage lediglich zu einem der beiden Verteilerschränke 11-1 oder 11-2 ein Zugang erforderlich ist. Die Montagearbeiten werden dadurch deutlich vereinfacht.

### Bezugszeichenliste

- 1: Verbindungselement
- 2: Grundkörper
- 3: Rückhaltemittel
- 4: Druckelement, Druckring
- 5: Bedienelement
5-1 erster Abschnitt
5-2 zweiter Abschnitt
- 6: Drehlager
- 7: Gewinde
- 8: Justageelement
- 9: Druckkörper
- 10: Gelenk
- 11: Verteilerschrank
11-1 erster Verteilerschrank
11-2 zweiter Verteilerschrank
- 12: Seitenwand
12-1 erste Seitenwand
12-2 zweite Seitenwand
- 13: Verbindungsbohrung
- 14: Türe
- 15: elektrische Leitung

- A: Bewegungsrichtung des Verschlussbügels
- T: Totpunkt
- X: Verschieberichtung

## Patentansprüche

1. Verbindungselement (1) zum Verbinden zweier nebeneinander angeordneter Seitenwände (12) zweier Verteilerschränke (11),
- mit einem länglichen Grundkörper (2), welcher zum Einführen in eine in beiden Seitenwänden (12) ausgebildete, fluchtende Verbindungsbohrung (13) vorgesehen ist,
- mit Rückhaltemitteln (3), welche an einem ersten Ende des länglichen Grundkörpers (2) angeordnet und derart ausgebildet sind, dass sie in einer Montageposition am Grundkörper (2) anliegen und durch die Verbindungsbohrung (13) durchführbar sind und nach erfolgter Durchführung durch die Verbindungsbohrung (13) in einer Verriegelungsposition vom Grundkörper (2) abstehen,
- mit einem Druckelement (4), welches an einem zweiten Ende des Grundkörpers (2) beweglich gelagert und mit einem Bedienelement (5) gekoppelt ist,
- wobei das Bedienelement (5) am Grundkörper (2) beweglich gelagert und derart ausgebildet ist, dass bei Betätigen des Bedienelements (5) das Druckelement (4) relativ zum Grundkörper (2) in Richtung der Rückhaltemittel (3) gedrückt wird, so dass die zwischen den verriegelten Rückhaltemitteln (3) und dem Druckelement (4) befindlichen Seitenwände (12) gegeneinander gedrückt werden.

2. Verbindungselement (1) nach Anspruch 1, wobei das Druckelement als Druckring (4) ausgebildet ist, welcher um den länglichen Grundkörper (2) herum angeordnet ist.

3. Verbindungselement (1) nach einem der Ansprüche 1 oder 2, wobei das Bedienelement als Verschlussbügel (5) ausgebildet ist, welcher an einem ersten Abschnitt (5-1) drehbeweglich an einem Drehlager (6) des Grundkörpers (2) befestigt ist und in einem zweiten Abschnitt (5-2) mit dem Druckelement (4) in Kontakt steht.

4. Verbindungselement (1) nach Anspruch 3, wobei der zweite Abschnitt (5-2) des Verschlussbügels (5) drehbeweglich am Druckring (4) befestigt ist.

5. Verbindungselement (1) nach Anspruch 3, wobei das Druckelement am zweiten Abschnitt (5-2) als Teil des Verschlussbügels (5) ausgebildet ist.

6. Verbindungselement (1) nach einem der Ansprüche 3 bis 5, wobei das Drehlager (6) zur Anpassung an unterschiedliche Wandstärken der Seitenwände (12) relativ zum Grundkörper (2) verschiebbar ausgebildet ist.

7. Verbindungselement (1) nach Anspruch 6, wobei die Verschiebung des Drehlagers (6) relativ zum Grundkörper (2) über ein Gewinde (7) realisierbar ist.

8. Verbindungselement (1) nach einem der Ansprüche 3 bis 7, wobei der Verschlussbügel (5) mehrteilig als Kniehebel ausgeführt ist.

9. Verbindungselement (1) nach einem der Ansprüche 3 bis 8, wobei der Verschlussbügel (5) über einen Totpunkt hinweg in eine sichere Verschlussposition bewegbar ist, in der ein unbeabsichtiges Öffnen des Verbindungselements (1) unterbindbar ist.

10. Anordnung, bestehend aus einem ersten Verteilerschrank (11-1), einem zweiten Verteilerschrank (11-2) sowie zumindest einem Verbindungselement (1) nach einem der Ansprüche 1 bis 9, wobei
- der erste Verteilerschrank (11-1) eine erste Seitenwand (12-1) aufweist,
- der zweite Verteilerschrank (11-2) eine zweite Seitenwand (12-2) aufweist, welche zur ersten Seitenwand (12-1) unmittelbar benachbart ist und
- wobei die beiden Seitenwände (12-1, 12-2) zumindest eine fluchtende Verbindungsbohrung (13) aufweisen, welche zum Verbinden der Verteilerschränke (11-1, 11-2) mit Hilfe des Verbindungselements (1) vorgesehen ist.
